# EUROPEAN PATENT SPECIFICATION

(11) **EP 1 770 904 B1**
(45) Date of publication and mention of the grant of the patent: **10.11.2010**
(21) Application number: 05021315.6
(22) Date of filing: 29.09.2005
(51) Int. Cl.: H04L 12/24, H04L 12/56

(54) **Method and network management system for determining the topology of a communication network**
Verfahren und Netzwerkverwaltungssystem zur Bestimmung einer Kommunikationsnetztopologie
Procédé et système de gestion de réseau pour déterminer la topologie d'un réseau de communication

(43) Date of publication of application: 04.04.2007
(73) Proprietor: Nokia Siemens Networks GmbH & Co. KG, 81541 München (DE)
(72) Inventor: Ribeiro, Alexandre, 2615-063 Alverca (PT)

(56) References cited:
- US-A1- 2002 154 606
- US-A1- 2003 179 707
- BREITBART Y ET AL: "Topology discovery in heterogeneous IP networks" INFOCOM 2000. NINETEENTH ANNUAL JOINT CONFERENCE OF THE IEEE COMPUTER AND COMMUNICATIONS SOCIETIES. PROCEEDINGS. IEEE TEL AVIV, ISRAEL 26-30 MARCH 2000, PISCATAWAY, NJ, USA,IEEE, US, vol. 1, 26 March 2000 (2000-03-26), pages 265-274, XP010376028 ISBN: 0-7803-5880-5
- LOWEKAMP B ET AL: "TOPOLOGY DISCOVERY FOR LARGE ETHERNET NETWORKS" COMPUTER COMMUNICATION REVIEW, ACM, NEW YORK, NY, US, vol. 31, no. 4, October 2001 (2001-10), pages 237-248, XP001115760 ISSN: 0146-4833

## Description

The present invention relates to a method and a network management system for determining the topology of a network.

The invention lies on the field of networking and communications. More specifically, the invention enhances network management functions.

More and more data networks morph into multimedia networks. Future networks need to guarantee different kinds of services with deviating requirements. Traditional data transmission should possibly not incur the loss of data. Higher data losses are acceptable for voice transmission, but the delay is much more crucial. Finally, multimedia applications require synchronizing voice and data.

Thus, network management needs to maintain a good control over the network. Network parameters needs to be adjusted as traffic fluctuates. Real-time traffic will necessitate prioritizing and policing of data. To deal with these requirements network management needs to be informed about network properties. Network topology is one of the essential factors that determine the behaviour of a network.

Modern networks are often modelled as nodes interconnected by links. These nodes usually comprise end points (such as stations, hosts, and terminals) and switches. The function of switches is to route or to relay data to their destination, i.e. to an end point. Routing is performed by help of addresses. The data traffic (mostly data packets, data frames, or cells) comprises address information relating the data to their source (e.g. the terminal generating the traffic) and their destination (e.g. the terminal to which the traffic is to be delivered). Switches rely on address tables or forward data bases (FDB) to determine the port of the switch on which the traffic has to be forwarded to its destination. Switches that operate on level 2 of the OSI reference model are called L2 switches or bridges, switches operating on level 3 are called L3 switches or routers. The address information used typically consists of L2 or L3 addresses, such as Ethernet addresses or IP addresses. Network management has to know the switches interconnect, i.e. the topology, to configure the network according to service requirements.

Hence, the network topology of a communication network constitutes essential input information for the network management to perform its functions. A straightforward way to provide the network management with topology information is to enter it manually, e.g. by help of a graphical editor.

Network-controlled collection of topology information has been proposed for networks employing a spanning tree protocol (STP protocol). The U.S. patent application publication 2002/0154606 discloses a method for determining the topology of a network based on the collection of address table data from the core network devices of a network. By means of the collected data a tree is built to determine the network topology. This method assumes the network topology to be loop-free so that a tree can be formed. To ensure loop-freeness a STP protocol is employed. Further, the successful reconstruction replies depends on whether the information of the investigated address tables is sufficient to completely deduce the network topology.

In US patent application 2003/0179707 a method for disseminating MAC addresses for discovered network devices is proposed. Received MAC addresses are forwarded from each receiving switch to other neighbour switches to get an idea of the network topology.

Two methods for topology discovery in communication networks are furthermore described in the following two documents.
1) Breitbart Y. et al, "Topology discovery in heterogeneous IP networks", Infocom 2000, 19th annual joint conference of the IEEE computer and communications societies, Israel 26-30 March 2000, Piscataway, NJ, USA, IEEE, US, vol. 1, 26 March 2000, pages 265-274 and
2) Lowekamp B. et al, "Topology discovery for large Ethernet networks", Computer communication Review, ACM, New York, NY, US, vol. 31, no. 4, October 2001, pages 237-248.

In both documents, methods are disclosed that provide for the détermination of a network topology by updating and comparing forwarding tables in the switches or nodes comprised within the respective networks.

The aim of the invention is to propose a method for determining the topology of a network that is largely free of assumptions of traditional methods.

The present invention relies on the observation that most L2 switches (layer 2 of the OSI reference model) and many L3 switches (layer 3 of the OSI reference model) are equipped with an address learning mechanism based on source addresses of incoming traffic. Accordingly, address learning can be performed by assigning a port identifier to a heretofore unknown destination address which corresponds to a source address of traffic arrived at this port.

The idea of the invention is to reset address tables of switches (possibly existing address tables are stored away and reused after completion of the present method to allow for reuse of previously learnt destination addresses) and to generate traffic in a way that the topology can be derived from learnt addresses.

According to a first method for determining the topology of a network comprising N interconnected switches following steps are performed:
- A first switch is chosen among the N interconnected switches. Generally, any of the switches may serve this purpose.
- The address tables of the N switches are reset.
- Traffic (e.g. data packets) from the first switch to all of said N switches is generated. Thus, entries in the address tables of the switches are created by way of the switches' learning behaviour. These entries specify the routing of traffic destined for the first switch.
- Traffic from all of the switches excluding the first switch to the first switch is generated so as to create further entries in the address tables. These entries will be indicative of the topology. Hence, in a final step:
- The topology of the N interconnected switches is determined by analysing the entries of the address tables (FDB) of the switches.

Preferably, the generation of traffic between two switches is induced by traffic management via a network management protocol such as SNMP (simple network management protocol).

The created entries reflect the topology so that this information can be put to use accordingly. The address tables can be obtained by network management and used to extract the desired topology information. One way to proceed is
- Measuring the distance between switches which is defined in terms of the minimum number of hops required for a path connecting two switches, and
- determining the topology by stepwise incrementing a maximum distance from the first switch and identifying the switches and connection between switches for all of the switches with a distance from the first switch being equal to or smaller than the maximum distance.

The above method only assumes that switches are configured to learn new destination addresses. It will work independent of other protocols deployed in the network. In particular, it does not reply on the use of a STP protocol. In addition, the present invention teaches to generate the information necessary to determine the network topology. Thus it is ensured that the information is sufficient to reconstruct the network topology.

The present method can be modified to work according to the following steps.

At least N-1 switches of the N switches are listed. Then following steps are performed consecutively for each of said N-1 switches:
- A first switch for which the directly connected switches have not yet been determined is chosen from the list,
- The address tables of the switches are reset.
- Traffic is generated from the first switch to all of the switches so as to create entries in said address tables.
- Traffic is generated from all of the switches except the first switch to the first switch so as to create entries in said address tables.
- Those switches which are directly connected to the first switches are determined by analysing said entries of said address tables (FDB) of said N switches.

This modified form of the present method introduces a loop over N-1 switches, i.e. N-1 iterations. This additional operation expense is compensated by a simplified analyse of results. At each iteration, only the directly connected switches (neighbour switches) are identified. After determining the neighbour switches of N-1 of the N switches the topology is known.

The above methods do not require the network to be loop-free if the switches employ a mechanism for using path information to determine optimal address table entries. The criterion is whether the switches will retain only one (optimal) address table entry to the first switch. When traffic from the first switch to the other switches is created the address of the first switch may be learnt more than once if the network is not loop-free. If there is a mechanism to evaluate learnt addresses, e.g. by examining a parameter such as the hop count, and to retain only the optimal entry (smallest number of hops) the methods will work analogously to the loop-free case.

The invention also comprises a network management system configured for performing the steps according to one of the present methods. Such a management system comprises software, hardware or firmware to implement following OAM (operation and maintenance) procedures:
- a procedure for identifying switches of a network,
- a procedure for resetting a address table of a switch,
   and
- a procedure for generating traffic between two switches.

Below, an embodiment of the present invention is described with reference to figures. The figures show
Fig. 1: a network scenario featuring switches and stations
Fig. 2: an address table entry of switch S1 shown in Fig. 1 after learning the destination address of station A
Fig. 3: an address table entry of switch S2 shown in Fig. 1 after learning the destination address of station A
Fig. 4: the address table of Fig. 2 with an additional entry added after learning the destination address of station B
Fig. 5: the address table of Fig. 3 with an additional entry added after learning the destination address of station B
Fig. 6: a scenario of interconnected switches

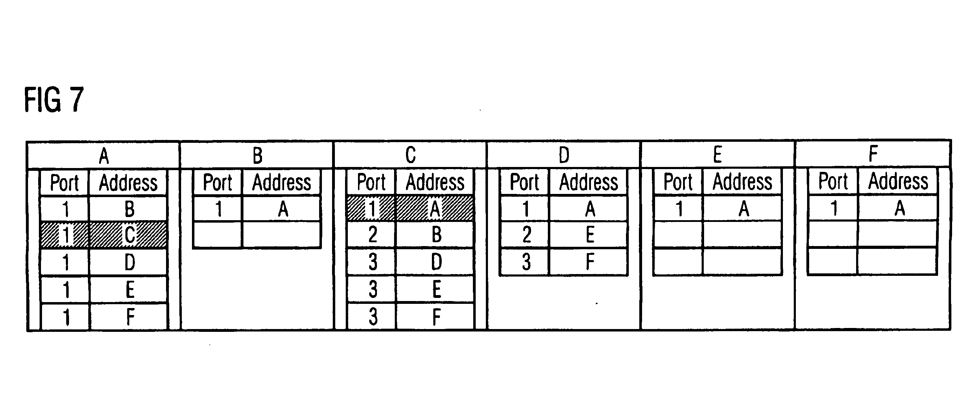

Fig. 7: address tables of the switches shown in Fig. 6 after performing one step of the present method

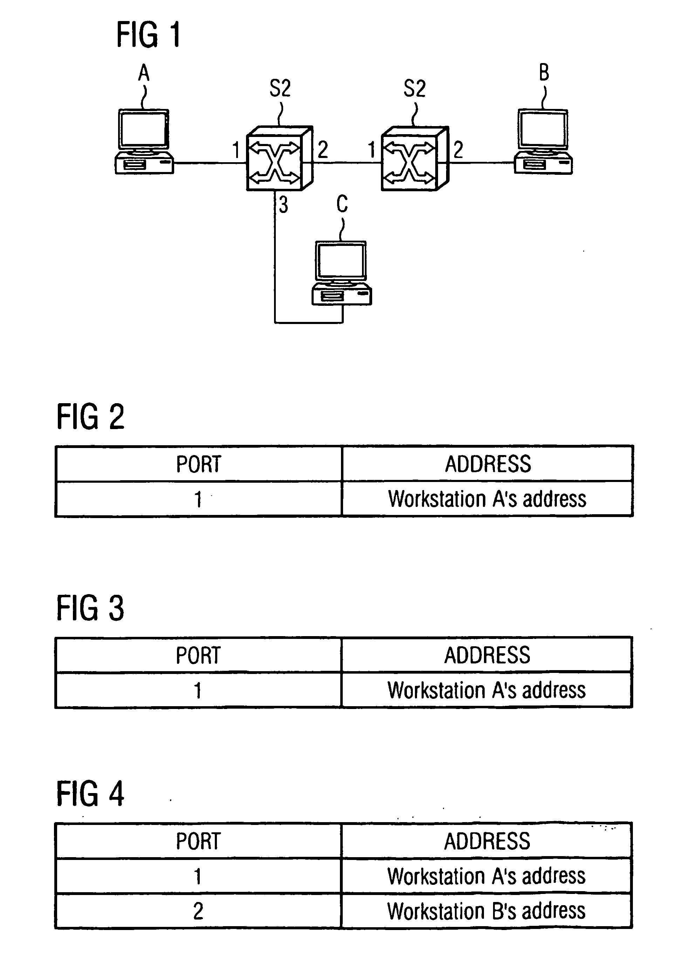

The invention relies on the learning behaviour of switches which is illustrated in Fig. 1 - Fig. 5. Fig. 1 shows two switches S1 and S2 that interconnect the stations A, B, and C. Ports of the shown switches are represented by numbers. Destination addresses are learnt from incoming traffic. Frames with unknown destination addresses are broadcast on all ports except where the frame was received. Once switch S1 receives traffic from station A (such as a data packet or data frame) the address of station A (which is included as source address in the incoming address) is extracted and established as destination address in the address table of switch S1. This destination address is assigned to the port where the traffic was received, i.e. port 1 in Fig. 1. After adding the destination address of station A any traffic destined for station A will be forwarded by switch S1 via port 1. Fig. 2 shows the corresponding address table entry.

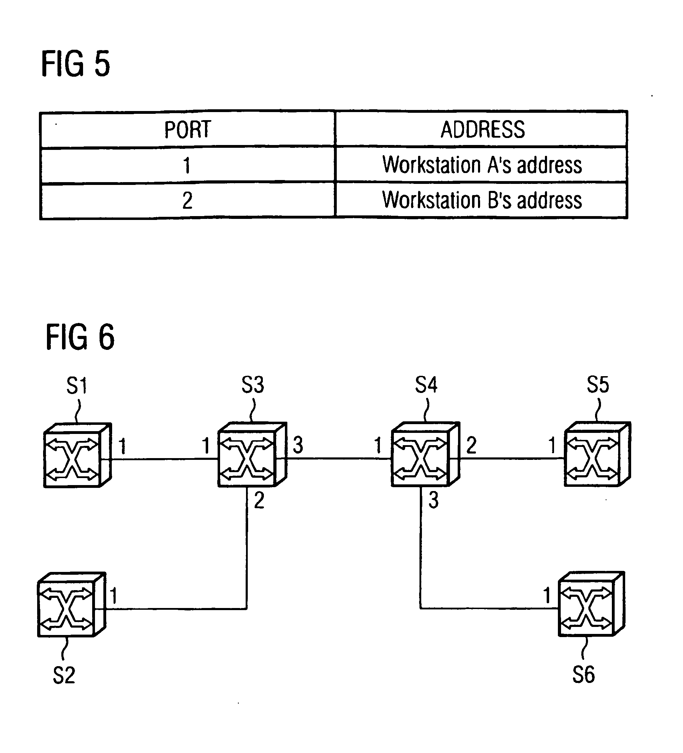

Fig. 2 shows an address table entry of switch S2 after learning the destination address of station A, fig. 3 shows the corresponding address table entry of switch B. Fig. 4 and fig. 5 show the address tables of switches S1 and S2 after adding the destination address of station B, which is also learnt through incoming traffic originated and sent by station B.

Fig. 6 shows the interconnected switches S1, S2, S3, S4, S5, and S6, i.e. N (the number of switches) is equal to six. The network management uses OAM (operation and maintenance) procedures to perform the present method. The employed protocol is the SNMP (simple network management protocol) protocol.

As an initial step, the network management detects and lists the switches S1, ..., S6 (unless this information is already available at the network management). Subsequently, following steps are consecutively performed for switches S1, ..., S5 i.e. for N-1 switches:
- The traffic tables of the switches are reset (possibly after storing them in the switches of the network management to be reused after determining the topology)
- Traffic is generated by the network management from the respective switch to the other switches
- Traffic is generated by the network management from the other switches to the respective switch
- The traffic tables of the switches are obtained by the traffic management
- The switches adjacent to the respective switch (i.e. the directly connected switches) are determined from the obtained traffic tables

Below, these steps are explained in more detail for switch S1 (i.e. switch S1 is the respective switch from the list).

After resetting the traffic tables E2E (end-to-end) OAM operations are carried through to generate traffic from
S1 to S2,
S1 to S3,
S1 to S4,
S1 to S5, and
S1 to S6.

Intermediate switches, i.e. switches that receive traffic destined for another switch will broadcast the traffic via all ports except the port on which the traffic was received. For example, switch S3 will broadcast the traffic destined for the switch S5 via the ports 2 and 3, i.e. to the switches S2 and S4. After this step all switches except switch S1 will have an entry for the port where to dispatch traffic to switch S1, i.e. these switches will have learnt the destinations address of switch S1.

Subsequently, E2E (end-to-end) OAM operations are carried through to generate traffic from
S2 to S1,
S3 to S1,
S4 to S1,
S5 to S1, and
S6 to S1.

Thus, destination addresses of S2, ..., S5 are learnt by all switches that receive the generated traffic. Intermediate switches will not broadcast the traffic as the destination address of switch S1 was learnt in the previous step. The resulting traffic tables are shown in fig. 6. Intermediate switches and switch S1 have learnt additional addresses. Which addresses are learnt depends on the topology of the network. There is only one address table entry for switch S3 in the address table of switch S1. Hence, switch S3 is directly connected with switch S1.

The information of the address tables is sufficient to reconstruct the network's topology in case of loop-freeness. Then switches whose addresses have been learnt by switch S3 are directly connected switches if there are no entries occurring in any address table except for switches S1 and S3, i.e. switches B and D.

Generally, directly connected switches can be determined by complete induction. The respective switch (or switch S1 in fig. 1) is the starting point. We measure distance in terms of hop counts. Also, we assume that all switches with a hop count of less than n-1 and the way they interconnect are identified. A switch is of order n (n hop counts) and directly connected to a switch of order n-1 if
i) the address of this switch was not learnt by any switch of order larger than n-1
ii) the address of this switch was learnt by said switch of order n-1
iii) this switch does not belong to the already identified switches of order equal or smaller than n-1

The topology may also be determined by only identifying the adjacent (neighbour) switches of the respective switch and by carrying out the above steps for N-1 switches.

The above method does also work for networks with loops under the assumption that the switches have a mechanism which compares the hop count of two paths to the same destination and retains only the path (or entry) with the lower hop count. Then the E2E OMA operations generating traffic from the respective switch to the other switches give rise to only one entry in each of the address tables of the other switches corresponding to the path with the lowest hop count. Consequently, the subsequent steps are analogous to the loop-free scenario.

## Claims

1. A method for determining a topology of a network comprising N interconnected switches (S1, S2, S3, S4, S5, S6), comprising the steps of
- choosing a first switch (S1) among said interconnected switches (S1, S2, S3, S4, S5, S6),
- resetting address tables of said N switches (S1, S2, S3, S4, S5, S6),
- generating traffic from the first switch (S1) to all of said N switches (S2, S3, S4, S5, S6) except the first switch,
- creating entries in said address tables depending on said traffic from the first switch (S1),
- generating traffic from all of said N switches (S2, S3, S4, S5, S6) except the first switch to the first switch (S1),
- creating entries in said address tables depending on said traffic from all of said N switches except the first switch (S1),
- analysing said entries in said address tables of said N switches (S1, S2, S3, S4, S5, S6)and
- determining the topology of said N interconnected switches (S1, S2, S3, S4, S5, S6) depending on said analysis,
wherein
- the analysis of said entries in said address tables comprises the step of determining those switches which are directly connected to the first switch (S1) and
- all steps are consecutively performed for at least N-1 switches.

2. The method according to claim 1, wherein
- a distance between switches is defined in terms of the minimum number of hops required for a path connecting two switches
- the topology is determined by stepwise incrementing a maximum distance from the first switch and identifying the switches and connection between switches for all of the switches with a distance from the first switch (S1) being equal to or smaller than the maximum distance.

3. A network management system comprising means adapted for performing the steps according to one of the claims 1 and 2.

## Patentansprüche

1. Verfahren zur Bestimmung einer Topologie eines Netzwerks mit N miteinander verbundenen Switches (S1, S2, S3, S4, S5, S6), mit den folgenden Schritten:
- Auswählen eines ersten Switch (S1) unter den miteinander verbundenen Switches (S1, S2, S3, S4, S5, S6),
- Zurücksetzen von Adressentabellen der N Switches (S1, S2, S3, S4, S5, S6),
- Erzeugen von Verkehr von dem ersten Switch (S1) zu allen der N Switches (S2, S3, S4, S5, S6) mit Ausnahme des ersten Switch,
- Erzeugen von Einträgen in den Adressentabellen abhängig von dem Verkehr von dem ersten Switch (S1),
- Erzeugen von Verkehr von allen der N Switches (S2, S3, S4, S5, S6) mit Ausnahme des ersten Switches zu dem ersten Switch (S1),
- Erzeugen von Einträgen in den Adressentabellen abhängig von dem Verkehr von allen der N Switches mit Ausnahme des ersten Switch (S1),
- Analysieren der Einträge in den Adressentabellen der N Switches (S1, S2, S3, S4, S5, S6) und
- Bestimmen der Topologie der N miteinander verbundenen Switches (S1, S2, S3, S4, S5, S6) abhängig von der Analyse, wobei
- die Analyse der Einträge in den Adressentabellen den Schritt des Bestimmens der Switches umfasst, die direkt mit dem ersten Switch (S1) verbunden sind, und
- alle Schritte aufeinanderfolgend für mindestens N-1 Switches ausgeführt werden.

2. Verfahren nach Anspruch 1, wobei
- über die kleinste Anzahl von für einen zwei Switches verbindenden Pfad erforderlichen Sprüngen eine Distanz zwischen Switches definiert wird,
- die Topologie durch schrittweises Inkrementieren einer maximalen Distanz von dem ersten Switch und Identifizieren der Switches und Verbindung zwischen Switches für alle der Switches mit einer Distanz von dem ersten Switch (S1) kleiner oder gleich der maximalen Distanz bestimmt wird.

3. Netzwerkmanagementsystem, welches Mittel umfasst, die dafür ausgelegt sind, die Schritte nach einem der Ansprüche 1 und 2 auszuführen.

## Revendications

1. Procédé de détermination d'une topologie d'un réseau comprenant N commutateurs (S1, S2, S3, S4, S5, S6) interconnectés, comprenant les étapes de
- choix d'un premier commutateur (S1) parmi lesdits commutateurs (S1, S2, S3, S4, S5, S6) interconnectés,
- réinitialisation de tables d'adresses desdits N commutateurs (S1, S2, S3, S4, S5, S6),
- génération d'un trafic à partir du premier commutateur (S1) jusqu'à tous lesdits N commutateurs (S2, S3, S4, S5, S6) à l'exception du premier commutateur (S1),
- création d'entrées dans lesdites tables d'adresses en fonction dudit trafic à partir du premier commutateur (S1),
- génération d'un trafic à partir de tous lesdits N commutateurs (S2, S3, S4, S5, S6) à l'exception du premier commutateur (S1) jusqu'au premier commutateur (S1),
- création d'entrées dans lesdites tables d'adresses en fonction dudit trafic à partir de tous lesdits N commutateurs à l'exception du premier commutateur (S1),
- analyse desdites entrées dans lesdites tables d'adresses desdits N commutateurs (S1, S2, S3, S4, S5, S6), et
- détermination de la topologie desdits N commutateurs (S1, S2, S3, S4, S5, S6) interconnectés en fonction de ladite analyse,
dans lequel
- l'analyse desdites entrées dans lesdites tables d'adresses comprend l'étape de détermination des commutateurs qui sont directement connectés au premier commutateur (S1) et
- toutes les étapes sont mises en oeuvre consécutivement pour au moins N-1 commutateurs.

2. Procédé selon la revendication 1, dans lequel
- une distance entre commutateurs est définie en termes du nombre minimum de sauts nécessaires pour une voie connectant deux commutateurs
- la topologie est déterminée par incrémentation pas à pas d'une distance maximum à partir du premier commutateur (S1) et par identification des commutateurs et de la connexion entre commutateurs pour tous les commutateurs avec une distance à partir du premier commutateur (S1) étant égale ou inférieure à la distance maximum.

3. Système de gestion de réseau comprenant un moyen adapté à mettre en oeuvre les étapes selon l'une des revendications 1 et 2.
